# EUROPÄISCHE PATENTANMELDUNG

(11) **EP 1 246 446 A2**
(43) Veröffentlichungstag der Anmeldung: **02.10.2002**
(21) Anmeldenummer: 02100103.7
(22) Anmeldetag: 04.02.2002
(51) Int. Cl.: H04M 15/00, H04M 3/42

(54) **Verfahren zum Generieren von LCR-Tabellen in einem Kommunikationssystem**

(30) Priorität: 13.03.2001 DE 10111997
(71) Anmelder: SIEMENS AKTIENGESELLSCHAFT, 80333 München (DE)
(72) Erfinder: Bäumer, Martin, 59069, Hamm (DE)

(57) **Zusammenfassung**

Die Erfindung betrifft ein Verfahren zum Generieren von LCR-Tabellen in einem Kommunikationssystem (KS) , das einen Kommunikationsserver (SRV) und mehrere einen Anschluss an unterschiedliche Netzwerke realisierende Peripherieeinheiten (PBX1,PBX2,PBX3) umfasst. Dabei wird in dem zentralen Kommunikationsserver (SRV) eine Information darüber gespeichert wird, über welche der Peripherieeinheiten (PBX1,PBX2,PBX3) eine Verbindung mit einem Ziel aufbaubar ist, und mit welchen Kosten ein derartiger Verbindungsaufbau verbunden ist. Aus diesen Informationen werden durch den zentralen Kommunikationsserver (SRV) für das Ziel Peripherieeinheiten-individuelle LCR-Tabellen (LCRT) erstellt.

## Beschreibung

Der Begriff "Least Cost Routing" (LCR) steht bei einem Verbindungswunsch ausgehend von einem anrufenden Teilnehmer für eine automatisierte Suche nach einem kostengünstigsten Leitweg zwischen dem rufenden und einem gerufenen Teilnehmer. Unterschiedliche Leitwege werden dabei häufig über unterschiedliche Telekommunikationsnetzanbieter - in der Literatur im allgemeinen mit Carrier bezeichnet - geführt. In modernen Peripherieeinheiten (z.B. Kommunikationsanlagen oder auch datentechnische Vermittlungseinheiten) ist oftmals ein Verfahren implementiert, durch das abhängig von einer gewählten Ziel-Rufnummer an einem an der Peripherieeinheit angeschlossenen Telekommunikationsendgerät und abhängig von der Tageszeit in einer Datenbank einen Carrier mit den günstigsten Verbindungskosten - in der Literatur häufig als Tarif bezeichnet - angewählt wird. Dieser Carrier wird in der Regel unter Vorwahl einer sogenannten "Preselect"-Nummer automatisiert von der Peripherieeinheit ausgewählt, ohne den Bediener des Telekommunikationsendgeräts mit einer eigenen Suche eines kostenoptimalen Carriers zu belasten.

In verteilten Kommunikationssystemen, die aus einer Vielzahl von intern vernetzten Peripherieeinheiten bestehen, beschränkt sich das Least Cost Routing nicht nur auf die Suche nach einem kostenoptimalen Carrier, sondern es muss auch die Möglichkeit einer kostengünstigeren Internverbindung in Betracht gezogen werden. Solche Kommunikationssysteme, die häufig als firmeninterne Netze betrieben werden, erstrecken sich meist über geographisch größere Gebiete, d.h. über nationale oder sogar internationale Bereiche. Verfügt ein derartiges Netzwerk beispielsweise über eine eigene, ausschließlich diesem Kommunikationssystem vorbehaltene Leitung ("Standleitung") von einer Stadt A in eine andere Stadt B, so ist es im Sinne eines Least Cost Routing angebracht, bei einem Verbindungswunsch eines in Stadt A ansässigen rufenden Teilnehmers zu einem gerufenen Teilnehmer in der Stadt B die Verbindung über die Standleitung in die Stadt B zu leiten und in dieser Stadt B einen kostengünstigen Ortsnetztarif eines Carriers innerhalb der Stadt B für die Zustellung zum gerufenen Teilnehmer zu nutzen.

In bestehenden Kommunikationssystemen dieser Art werden Least Cost Routing-Informationen enthaltende Datenbanken meist in der jeweiligen Peripherieeinheit gespeichert und unabhängig voneinander administriert.

Unabhängig von der Komplexität und der Organisation dieser in einer Datenbank enthaltenen Least Cost Routing Informationen wird im folgenden von "LCR-Tabellen" gesprochen. Mit dem Begriff "Tabelle" soll eine bildhafte Vorstellung der Zuordnung einer kostenoptimalen Netzwerkverbindung zu Parametern wie der gewählten Rufnummer, der Tageszeit usw. erreicht werden und nicht eine Einschränkung auf eine datentechnische Organisation der Least Cost Routing-Information, die gewöhnlich in Form relationaler Datenbanken oder anderen Organisationsformen vorliegen, erfolgen.

Mit der lokalen Administration von LCR-Tabellen in jeder einzelnen Peripherieeinheit innerhalb des Kommunikationssystems entsteht bei dessen Erweiterung um eine zusätzliche Peripherieeinheit das Problem, dass die LCR-Tabellen jeweils aller anderen Peripherieeinheiten innerhalb des Kommunikationssystems aktualisiert werden müssen, um über die neu hinzugekommene Peripherieeinheit - und eventuell weiterer Standleitungen - günstigere Verbindungsmöglichkeiten über das Kommunikationssystem im Sinne eines Least Cost Routings zu ermöglichen.

Der vorliegenden Erfindung liegt die Aufgabe zugrunde, eine aufwändige Administrierung einer Datenbank in jeder Peripherieeinheit innerhalb eines verteilten Kommunikationssystems zu vermeiden.

Eine Lösung der Aufgabe erfolgt durch die Merkmale des Patentanspruchs 1.

Erfindungsgemäß wird über einen zentralen Kommunikationsserver des verteilten Kommunikationssystems eine Generierung der LCR-Tabellen für die jeweiligen Peripherieeinheiten vorgenommen.

Ein wesentlicher Vorteil des erfindungsgemäßen Verfahrens besteht darin, dass der Arbeitsaufwand einer multiplen und zumeist manuell vorzunehmenden Administration der LCR-Tabellen in den einzelnen Peripherieeinheiten eines Kommunikationssystemen mit dem erfindungsgemäßen Verfahren - für jede einzelne Peripherieeinheit sowie für jedes dort gerufene Ziel optimiert - automatisiert werden kann.

Ein weiterer Vorteil des erfindungsgemäßen Verfahrens ist darin zu sehen, dass mit der zunehmenden Verbreitung moderner Client-Server-Systeme auch in der Kommunikationstechnik ein ohnehin vorhandener Kommunikationsserver einfach um die Funktionalität für ein netzweites Least Cost Routing erweiterbar ist.

Vorteilhafte Weiterbildungen der Erfindung sind in den Unteransprüchen angegeben.

Vorteilhaft werden die LCR-Tabellen nach ihrer Generierung im Kommunikationsserver an die einzelnen Peripherieeinheiten übermittelt und zum Beispiel in deren Datenbank lokal gespeichert, um die Datenverkehrsbelastung bei einer Abfrage von Least Cost Routing-Informationen über das Kommunikationssystem gering zu halten.

Mit der Verwendung eines paketorientierten Netzwerks zur Übermittlung von Steuer- und Nutzdaten können vorteilhaft bestehende Datennetzwerke mit dem aus der Literatur bekannten "Voice over IP"-Verfahren (VoIP) Verwendung finden.

Ein Ausführungsbeispiel der Erfindung wird im folgenden anhand der Zeichnung näher erläutert.

Dabei zeigen:
- Fig. 1:: ein Strukturbild zur schematischen Darstellung eines verteilten Kommunikationssystems;
- Fig. 2A:: eine schematische Darstellung eines Wahlplans und zweier Wegetabellen;
- Fig. 2B:: eine schematische Darstellung einer modifizierten Wegetabelle und einer LCR-Tabelle; und
- Fig. 3: ein Ablaufdiagramm zur Veranschaulichung der bei einer Generierung von LCR-Tabellen ablaufenden, wesentlichen Verfahrensschritte.

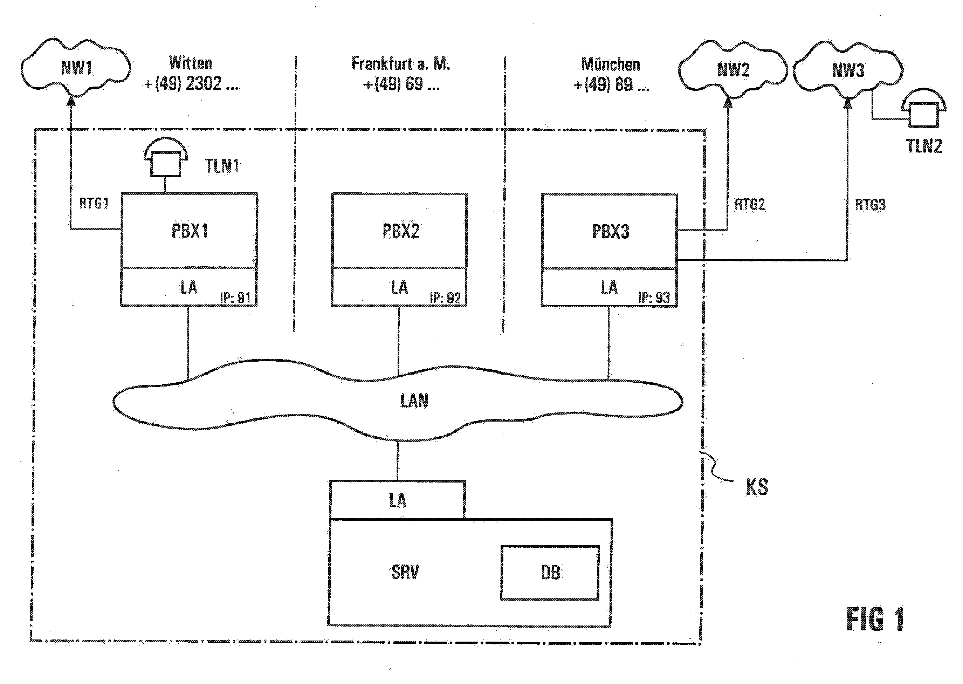

In Fig. 1 ist ein verteiltes Kommunikationssystem KS mit einem eine Datenbank DB enthaltender Kommunikationsserver SRV und drei Peripherieeinheiten PBX1,PBX2,PBX3 dargestellt, die über ein paketvermittelndes Netzwerk LAN miteinander verbunden sind. Die Peripherieeinheiten PBX1,PBX2,PBX3 sind dabei beispielsweise durch Kommunikationsanlagen realisiert.

In modernen Kommunikationssystemen werden Verbindungen zur Übermittlung kontinuierlicher Datenströme, z.B. zur Sprachoder Videokommunikation, in zunehmendem Maße auch über paketvermittelnde Kommunikationsnetze, wie z.B. LANs (Local Area Networks), MANs (Metropolitan Area Networks) oder WANs (Wide Area Networks), geführt. Auf dieser Technik basiert beispielsweise die sogenannte Internettelephonie, die häufig auch als "Voice over Internet Protocol" (VoIP) bezeichnet wird.

Die erste Peripherieeinheit PBX1 befindet sich im Ausführungsbeispiel geographisch in der Stadt Witten mit der zugehörigen Ortsnetzkennzahl +(49)302, die zweite Peripherieeinheit PBX2 in der Stadt Frankfurt am Main mit der zugehörigen Ortsnetzkennzahl +(49)69 und die dritte Peripherieeinheit PBX3 in der Stadt München mit der zugehörigen Ortsnetzkennzahl + (49) 89.

Der Kommunikationsserver SRV sowie die drei Peripherieeinheiten PBX1,PBX2,PBX3 verfügen jeweils über eine LAN-Anschlusseinheit LA, die einer Übertragung von Steuer- und Nutzdaten über das paketvermittelnde Netzwerk LAN dienen. Ein möglicher Leitweg - im folgenden auch als "Richtung" bezeichnet - für einen Vermittlungswunsch eines rufenden Teilnehmers TLN1 an der Peripherieeinrichtung PBX1 zu einem gerufenen Teilnehmer TLN2 kann somit ausgehend von der Peripherieeinheit PBX1 über das paketvermittelnde Netzwerk LAN zur Peripherieeinheit PBX3 führen, durch die eine weitere Vermittlung an das Netzwerk NW3 veranlasst wird.

Neben einem Anschluss LA an das paketvermittelnde Netzwerk LAN verfügt die erste Peripherieeinheit PBX1 in der Stadt Witten über einen Anschluss an ein Netzwerk NW1 "Telekom". Die dritte Peripherieeinheit PBX3 in der Stadt München verfügt neben dem Anschluss an das paketvermittelnde Netzwerk LAN über einen Anschluss an das Netzwerk NW2 "Viag Interkom" und einen Anschluss an das Netzwerk NW3 "Telekom", wobei unter Netzwerken NW1,NW2,NW3 Netzanbieter (Carrier) zu verstehen sind, die an der ersten oder dritten Peripherieeinheit PBX1,PBX3 direkt, durch Vorwahl einer Ziffer - in unzeitgemäßer Bezeichnung oft noch als "Amtsholung" bezeichnet - angewählt werden können. Im Ausführungsbeispiel sei angenommen, dass ein an die erste Peripherieeinheit PBX1 angeschlossener Teilnehmer eine Verbindung zum Netzwerk NW1 "Telekom" durch Vorwahl einer "0" herstellen kann. Ein an die dritte Peripherieeinheit PBX3 angeschlossener Teilnehmer stellt eine Verbindung zum Netzwerk NW3 "Telekom" ebenfalls durch Vorwahl einer "0" her und kann überdies, durch Vorwahl einer "9" eine Verbindung zum Netzwerk NW3 "Viag Interkom" aufbauen.

Alternativ können Verbindungswünsche auch durch eine - mit dem LCR-Verfahren automatisierte - Vorwahl einer Preselect-Nummer über weitere Carrier nach dem sogenannten "Call-by-Call-Verfahren" geleitet werden. Die zweite Peripherieeinheit PBX2 in der Stadt Frankfurt am Main verfügt neben einen Anschluss an das paketvermittelnde Netzwerk LAN über keinen weiteren Anschluss und kann somit ausgehende und eingehende Verbindungswünsche ausschließlich über das paketvermittelnde Netzwerk LAN aufbauen.

Zur Identifizierung der Peripherieeinheiten PBX1,PBX2,PBX3 im paketvermittelnden Netz LAN ist jeder Anschlusseinheit LA einer Peripherieeinheit PBX1,PBX2,PBX3 eine eindeutige IP-Adresse IP (Internet Protocol) zugeordnet, deren Wert - aus Übersichtlichkeitsgründen auf zwei Stellen verkürzt - für die erste Peripherieeinheit PBX1 als 91, für die zweite Peripherieeinheit PBX2 als 92 und für die dritte Peripherieeinheit PBX3 als 93 angenommen wird.

In der Datenbank DB des Kommunikationsservers SRV sind unter anderem Informationen gespeichert, in welchem Ortsnetzbereich sich die jeweilige Peripherieeinheit PBX1,PBX2,PBX3 befindet, welche Richtungen RTG1,RTG2,RTG3 durch die jeweilige Peripherieeinheit PBX1,PBX2,PBX3 aufbaubar sind und welche Gesprächstarife - in tageszeitlicher Abhängigkeit - über die jeweilige Richtung RTG1,RTG2,RTG3 anfallen. Aus diesen Informationen werden durch eine - nicht dargestellte - Steuereinheit des Kommunikationsservers - nicht dargestellte - LCR-Tabellen LCRT erstellt, die abhängig von einem zu rufenden Ziel und abhängig von der vermittelnden Peripherieeinheit PBX1,PBX2,PBX3 eine Wahlregel für den kostengünstigsten Leitweg enthalten. Diese Peripherieeinheiten-individuellen LCR-Tabellen LCRT werden nach Ihrer Generierung über das paketvermittelnde Netzwerk LAN den zugeordneten Peripherieeinheiten PBX1,PBX2,PBX3 übermittelt und in diesen in einer - nicht dargestellten - lokalen Datenbank gespeichert.

Im folgenden wird unter weiterer Bezugnahme auf die Funktionseinheiten der Fig. 1 die Generierung der Peripherieeinheiten-individuellen LCR-Tabellen näher erläutert.

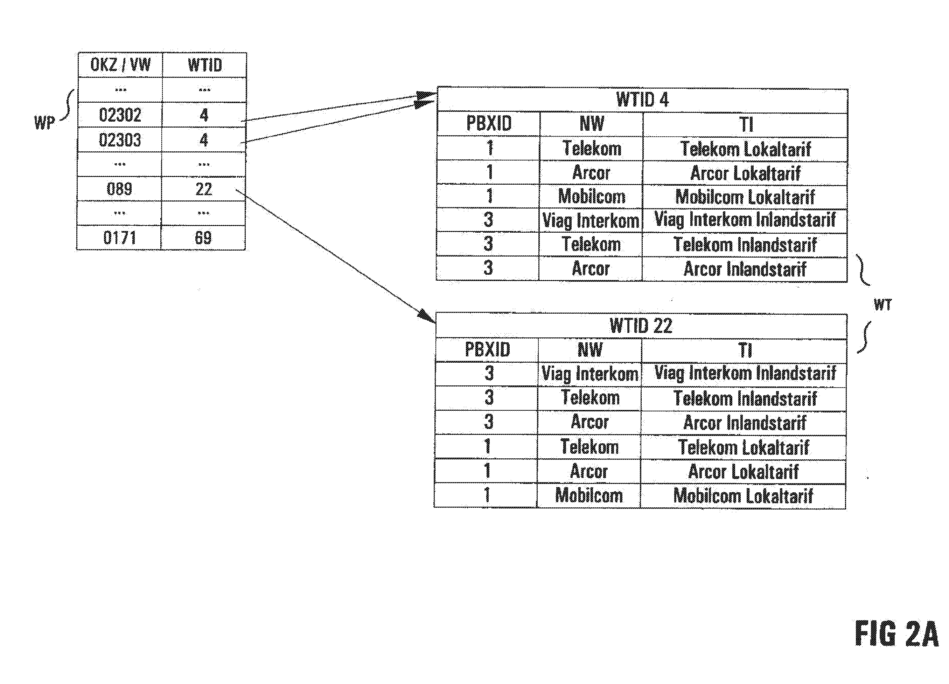

Fig. 2A zeigt einen Wahlplan WP für alle im Kommunikationssystem enthaltenen Peripherieeinheiten PBX1,PBX2,PBX3, der - zum Beispiel in Form einer Tabelle - in der Datenbank DB des Kommunikationsservers SRV gespeichert ist. Dieser Wahlplan WP ordnet einer gewählten Ortsnetzkennziffer OKZ oder einer gewählten, einen Mobilfunknetzanbieter repräsentierenden Vorwahlnummer VW eine Wegetabellenidentifikationsnummer WTID zu. Im Anwendungsbeispiel sind die, beide dem gleichen Ortsnetzbereich zugeordneten Ortsnetzkennzahlen OKZ "02302" (Witten) und "02303" (Unna) der Wegetabellenidentifikationsnummer WTID 4 zugeordnet.

Eine der Wegetabellenidentifikationsnummer WTID 4 zugeordnete Wegetabelle WT enthält eine die zu verwendende Peripherieeinheit PBX1,PBX3 zur Vermittlung eines ausgehenden Verbindungswunsches angebende Peripherieeinheitenidentifikationsnummer PBXID, das dabei zu wählende Netzwerk NW und eine Tarifinformation TI dieses Netzwerks NW.

Die zweite Peripherieeinheit PBX2 in der Stadt Frankfurt am Main ist in keiner der Wegetabellen WT vertreten, da durch diese neben der Richtung auf das paketvermittelnde Netzwerk LAN keine weitere Richtung auf ein Netzwerk vorgesehen ist.

Bei der in der Stadt Witten ansässigen ersten Peripherieeinheit PBX1 ist gemäß der Wegetabelle WT mit der Wegetabellenidentifikationsnummer WTID 4 ein ausgehender Verbindungswunsch einerseits direkt an dieser ersten Peripherieeinheit PBX1 über die Richtung RTG1 mit einer Verwendung des Netzwerks NW1 "Telekom" oder weiterer Netzwerke wie "Arcor" oder "Mobilcom" durch Vorwahl einer Preselect-Nummer möglich, andererseits auch - unter Verwendung der Richtung über das paketvermittelnde Netzwerk LAN - über die dritte Peripherieeinheit PBX3 in der Stadt München unter Verwendung der dortigen Richtungen RTG2, RTG3. Die der dritten Peripherieeinheit PBX3 zur Verfügung stehende Richtung RTG2 weist auf das Netzwerk "Viag Interkom", die Richtung RTG3 weist auf das Netzwerk "Telekom". Über eine Preselect-Nummer ist in der dritten Peripherieeinheit PBX3 eine Verbindung mit dem Netzwerk "Arcor" herstellbar.

Da die erste Peripherieeinheit PBX1 in einem die Gemeinden Witten und Unna umfassenden Ortsnetzbereich lokalisiert ist, ist ein zugehöriger Gesprächskostentarif - repräsentiert durch die Tarifinformation TI in der Wegetabelle WT - bei einem ausgehenden Verbindungswunsch von der ersten Peripherieeinheit PBX1 nach Witten oder Unna (mit den Ortsnetzkennzahlen "02302" bzw. "02303") ein Lokaltarif der verfügbaren Netzwerke NW, die Tarifinformationen TI sind dementsprechend in der Wegetabelle mit der Wegetabellenidentifikationsnummer WTID 4 durch "Telekom Lokaltarif", "Arcor Lokaltarif" bzw. "Mobilcom Lokaltarif" charakterisiert.

Wird dagegen an der ersten Peripherieeinheit PBX1 ein ausgehender Verbindungswunsch in die den Ortsnetzkennzahlen OKZ "02302" bzw. "02303" zugeordneten Ortsnetze unter Verwendung der Richtung über das paketvermittelnde Netzwerk LAN über die dritte, in der Stadt München ansässigen Peripherieeinheit PBX3 vermittelt, ist über die dort verfügbaren Netzwerke NW eine Verbindung lediglich über einen kosten-ungünstigeren Inlandstarif möglich. Unter Verwendung der an der dritten Peripherieeinheit PBX3 verfügbaren Richtung RTG2 ist eine Verbindung zum Netzwerk NW "Viag Interkom", unter Verwendung der Richtung RTG1 eine Verbindung zum Netzwerk NW "Telekom" möglich. Darüber hinaus kann, unter Verwendung einer der Richtungen RTG2, RTG3 durch Vorwahl einer Preselect-Nummer eine Verbindung zum Netzwerk NW "Arcor" aufgebaut werden. Die Tarifinformationen TI sind dementsprechend in der Wegetabelle mit der Wegetabellenidentifikationsnummer WTID 4 durch "Viag Interkom Inlandstarif", "Telekom Inlandstarif" bzw. "Arcor Inlandstarif" charakterisiert.

Als weiteres Beispiel einer Wegetabelle WT sei die, im Wahlplan WP der Ortsnetzkennzahl OKZ "089" und dem entsprechenden Ortsnetzbereich München zugeordnete Wegetabelle WT mit der Wegetabellenidentifikationsnummer WTID 22 genannt. Diese Wegetabelle WT beinhaltet die zur Verfügung stehenden Peripherieeinheiten PBX1,PBX3 und von diesen Peripherieeinheiten PBX1,PBX3 auswählbaren Netzwerke NW bei einem ausgehenden Verbindungswunsch eines im Kommunikationssystem KS lokalisierten Teilnehmers, z.B. den Teilnehmer TLN1, in das der Ortsnetzkennzahl OKZ "089" zugeordnete Ziel-Ortsnetz München, z.B. zu dem gerufenen Teilnehmer TLN2. Die der Wegetabellenidentifikationsnummer WTID 22 zugeordnete Wegetabelle WT enthält zeilenweise Einträge, die mit der der Wegetabellenidentifikationsnummer WTID 4 zugeordneten Wegetabelle WT identisch sind. In Hinblick auf die kostengünstigere Alternative einer Verwendung der dritten Peripherieeinheit PBX3 bei der Anwahl des Ortsnetzes München sind in der der Wegetabellenidentifikationsnummer WTID 22 zugeordnete Wegetabelle WT im Vergleich zu der der Wegetabellenidentifikationsnummer WTID 4 zugeordnete Wegetabelle WT die drei verfügbaren Wege unter Verwendung der dritten Peripherieeinheit PBX3 an oberster Stelle eingetragen.

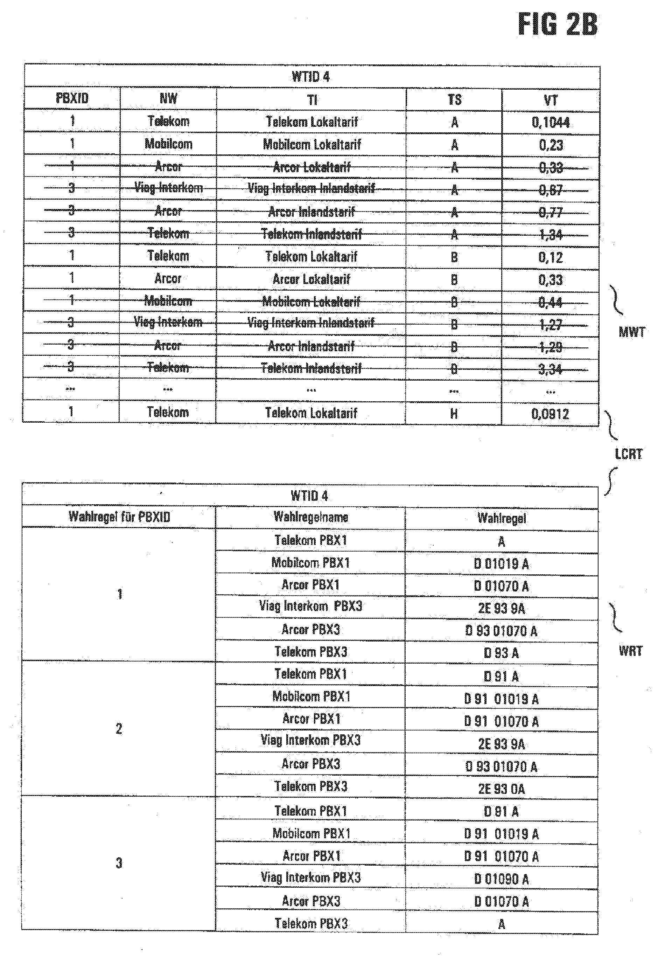

Fig. 2B zeigt eine modifizierte Wegetabelle MWT und eine Wahlregeltabelle WRT, die beide der Wegetabellenidentifikationsnummer WTID 4 zugeordnet sind. Jeweils ein Satz, bestehend aus einer modifizierten Wegetabelle MWT und einer Wahlregeltabelle WRT wird Peripherieeinheiten-individuell erstellt und mit der allgemeinen Bezeichnung LCR-Tabellen LCRT an die entsprechende Peripherieeinheit PBX1,PBX2,PBX3 übermittelt.

Die modifizierte Wegetabelle MWT ergibt sich aus der jeweiligen Wegetabelle WT, im Beispiel der Wegetabelle WT mit der Wegetabellenidentifikationsnummer WTID 4 durch eine Gewichtung nach einem Verbindungstarif VT, der die Tarifkosten einer Verbindung für eine bestimmte Zeitspanne (im Ausführungsbeispiel sei eine Zeitspanne von 3 Minuten und 11 Sekunden angenommen) angibt.

Da die Netzanbieter Ihre Tarifstruktur in einzelne Zeitzonen gliedern, innerhalb derer unterschiedliche Tarife gültig sind, ist im Sinne eines Least-Cost-Routing eine tageszeitliche Abhängigkeit bei der Wahl des günstigsten Netzbetreibers zu beachten. Mit einer Aufteilung in Zeitschlitze TS, die im Ausführungsbeispiel mit "A" bis "H" benannt sind, wird eine Abbildung der unterschiedlichen tageszeitlichen Einteilung der Tarifstruktur verschiedener Anbieter auf ein für alle Netzanbieter einheitliches Zuordnungssystem erreicht.

Im Anschluss werden die Zeilen der modifizierten Wegetabelle nach den einzelnen Zeitschlitzen gruppiert und innerhalb jedes Zeitschlitzes nach dem kostengünstigsten Verbindungstarif VT geordnet. Um im Sinne eines Least Cost Routings bei einem ausgehenden Verbindungswunsch eines Teilnehmers (die modifizierte Wegetabelle MWT in Fig. 2B enthält alle für einen Teilnehmer des Kommunikationssystems KS möglichen Verbindungswege in den Ziel-Ortsnetzbereich München) lediglich die kostengünstigsten Verbindungen anzubieten, werden einige Wege (in der Fig. 2B durch Streichungen der jeweiligen Zeileneinträge angedeutet) im Rahmen einer Komprimierung nicht für die den aufzubauenden Verbindungswunsch herangezogen. In der modifizierten Wegetabelle MWT der Fig. 2B ist beispielsweise ersichtlich, dass sich Verbindungswünsche in den Ortsnetzbereich München am kostengünstigsten durch über die dort lokalisierte erste Peripherieeinheit PBX1 realisieren lassen, Wege über die Peripherieeinheit PBX3 demgemäß gestrichen sind.

Modifizierte Wegetabellen MWT gelten für alle Peripherieeinheiten PBX1,PBX2,PBX3 des Kommunikationssystems KS wobei für jede Ortsnetzkennziffer OKZ bzw. für jede einen Mobilfunknetzanbieter repräsentierenden Vorwahlnummer VW eine individuelle modifizierte Wegetabelle MWT erstellt wird.

Im folgenden wird die Wahlregeltabelle WRT erläutert, die eine Wahlregel für jeweils jede Peripherieeinheit PBX1,PBX2,PBX3 abhängig vom an dieser Peripherieeinheit PBX1,PBX2,PBX3 zu wählenden Netzwerks NW angibt. Die Wahlregeltabelle WRT legt Peripherieeinheiten-individuell und abhängig von dem in der modifizierten Wegetabelle MWT spezifizierten anzuwählenden Netz eine Wahlregel fest, nach der eine ausgehende Verbindung eines Teilnehmers zu wählen ist. Die vom Teilnehmer eingegebene Rufnummer (in der Wahlregelspalte der Wahlregeltabelle mit dem Kodezeichen "A" angegeben) wird im Falle einer Wahl des Netzwerks "Telekom" durch die erste Peripherieeinheit PBX1 unverändert übernommen. Im Fall, dass das Netzwerk "Mobilcom" durch eine Preselect-Nummer über die erste Peripherieeinheit PBX1 ausgewählt werden soll, wird durch die vom Teilnehmer eingegebene Nummer mit einer Vorauswahl der Preselect-Nummer "01019" ausgewählt. Die zugehörige Wahlregel lautet "D 01019 A", wobei "D" ("Dial") eine Vorwahl einer Preselect-Nummer für ein alternatives Call-by-Call-Netzwerk bezeichnet. Soll über die erste Peripherieeinheit PBX1 eine Verbindung über die Richtung des paketvermittelnden Netzwerks LAN zu der dritten Peripherieeinheit PBX3 und von dort in das Netzwerk "Arcor" erfolgen, wird mit der Wahlregel "D 93 0170 A" der Leitweg zuerst mit Wahl ("D") der IP-Adresse ("93") auf die dritte Peripherieeinheit PBX3 geführt, wo anschließend, durch Vorwahl der Preselect-Nummer "0170", die der eingegebenen Rufnummer des rufenden Teilnehmers entsprechende Verbindung aufgebaut wird. Eine weitere Komponente der Kodierung einer derartigen Wahlregel ist "2E", durch die eine Übernahme der gewählten Rufnummer ("A") des rufenden Teilnehmers unter Ausblendung der ersten Ziffer (die eine Externverbindung in Form einer "Amtsholung" veranlasst) und Nachwahl einer alternativen Ziffer, vor der Komponente "A" stehenden angewiesen wird. Für eine Wahl des Netzwerks NW "Viag Interkom" über die Peripherieeinheit PBX3 von der Peripherieeinheit PBX1 ausgehend ist als Wahlregel "2E 93 9A" auszuführen. Diese Wahlregel veranlasst eine Führung des Leitwegs über die dritte Peripherieeinheit mit der IP-Adresse "93", wo die vom Teilnehmer inklusive der führenden Null für die "Amtsholung" gewählte Nummer "A" wird mit dem Kode "2E" um die erste führende Null der "Amtsholung" beschnitten wird und als alternative "Amtsholung", eine Neun vorgewählt wird ("9A"), die eine Auswahl des Netzwerks "Viag Interkom", d.h. der Richtung RTG2 der Peripherieeinheit PBX3, bewirkt.

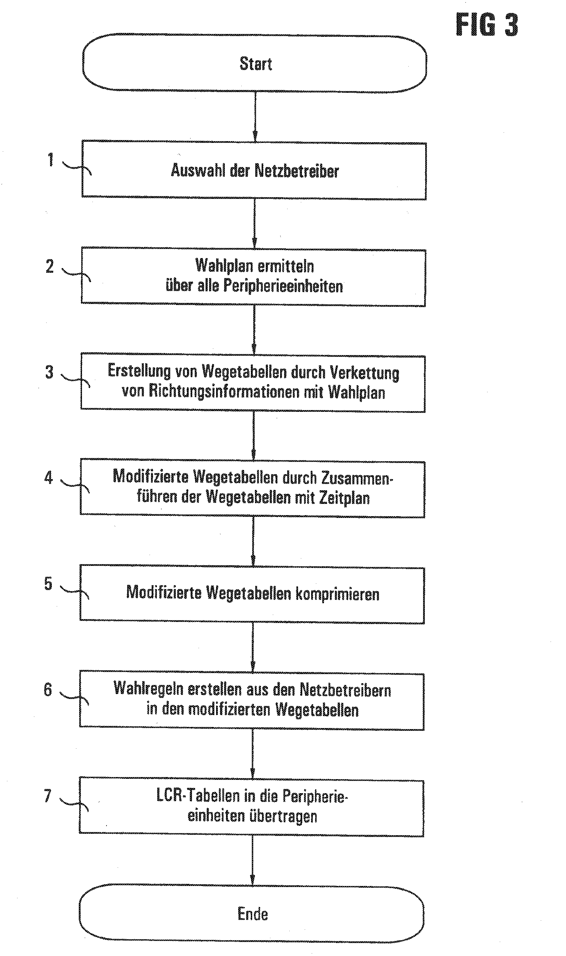

Fig. 3 zeigt ein Ablaufdiagramm eines Algorithmus zur automatisierten Generierung der LCR-Tabellen, wobei die aufeinanderfolgenden Schritte in Fig. 3 mit einer Ziffer neben dem Ablaufdiagramm bezeichnet sind.

Für eine Auswahl der Netzbetreiber (Schritt 1) wird durch eine Steuereinheit des Kommunikationsservers SRV in der Datenbank DB aus Peripherieeinheiten-individuellen Datensätzen die an den jeweiligen Peripherieeinheit PBX1,PBX2,PBX3 verfügbaren Netzbetreiber extrahiert und in ein entsprechendes Datenformat aufbereitet.

In Schritt 2 wird ein Wahlplan WP aus Informationen in der Datenbank DB über die im Kommunikationssystem abgedeckten Ortsnetzbereiche und deren Ortsnetzkennzahlen OKZ bzw. die einen Mobilfunknetzanbieter repräsentierenden Vorwahlnummern VW erstellt, wobei durch eine Steuereinheit des Kommunikationsservers SRV den jeweiligen Nummerneinträgen jeweils eine identifizierende, eindeutige Nummer - die Wegetabellenidentifikationsnummer WTID - zugeordnet wird, die auf eine, dieser Wegetabellenidentifikationsnummer WTID zugeordneten, im Schritt 3 generierten Wegetabelle WT, bzw. auf deren modifizierte Form, der in Schritt 4 generierten modifizierten Wegetabelle MWT verweist.

In Schritt 3 werden Richtungsinformationen aus Datenbankinformationen über die den einzelnen Peripherieeinheiten PBX1,PBX2,PBX3 verfügbaren Richtungen RTG1,RTG2,RTG3 sowie der allen Peripherieeinheiten PBX1,PBX2,PBX3 gemeinsamen Richtung auf das paketvermittelnde Netzwerk LAN aus den Einträgen Peripherieeinheiten-individueller Datensätzen in der Datenbank DB extrahiert und durch Verkettung mit dem Wahlplan WP jeweils Peripherieeinheiten-individuelle Wegetabellen WT erzeugt. Die Verkettung der Richtungsinformationen mit dem Wahlplan WP bewirkt, dass in den jeweiligen Wegetabellen WT neben den, der jeweiligen Peripherieeinheit PBX1,PBX2,PBX3 unmittelbar verfügbaren Richtungen RTG1,RTG2,RTG3 auch Leitwege über das paketvermittelnde Netz LAN an eine andere Peripherieeinheit PBX1,PBX2,PBX3 und an eine dort verfügbare Richtung RTG1,RTG2,RTG3 eingetragen sind. Dadurch ist es möglich, den Leitweg zu einen außerhalb des Kommunikationssystems KS gerufenen Teilnehmer in weiten Teilen tariffrei innerhalb des Kommunikationssystem KS zu führen und erst an einer nahe an dem Ortsnetz des gerufenen Teilnehmers liegenden Peripherieeinheit PBX1,PBX2,PBX3 in ein tarifbelegtes Netzwerk NW1,NW2,NW3 zu wechseln.

In Schritt 4 werden modifizierte Wegetabellen MWT erzeugt, indem Tarifinformationen aus der Datenbank in den Datensatz der Wegetabellen hinzugefügt werden.

In Schritt 5 wird eine Komprimierung der modifizierten Wegetabellen MWT durchgeführt, in der einige mit hohen Gesprächstarifen verbundene Wege datentechnisch zugunsten eines niedrigen Speicherplatzbedarfs komprimiert werden.

Die Wahlregeltabelle WRT in Schritt 6 wird aus den verfügbaren Netzwerken der modifizierten Wegetabelle MWT in Verbindung mit Wahlkonventionen der einzelnen Peripherieeinheiten PBX1,PBX2,PBX3 erstellt.

In einem abschließenden Schritt 7 werden die LCR-Tabellen LCRT, also die modifizierte Wegetabelle MWT und die Wahlregeltabelle WRT an die einzelnen Peripherieeinheiten PBX1,PBX2,PBX3 übertragen.

## Patentansprüche

1. Verfahren zum Generieren von LCR-Tabellen in einem Kommunikationssystem,
wobei das Kommunikationssystem (KS) einen Kommunikationsserver (SRV) und mehrere einen Anschluss an unterschiedliche Netzwerke realisierende Peripherieeinheiten (PBX1,PBX2,PBX3) umfasst,
bei dem in dem zentralen Kommunikationsserver (SRV) eine Information darüber gespeichert wird, über welche der Peripherieeinheiten (PBX1,PBX2,PBX3) eine Verbindung mit einem Ziel aufbaubar ist, und mit welchen Kosten ein derartiger Verbindungsaufbau verbunden ist, und,
bei dem aus diesen Informationen durch den zentralen Kommunikationsserver (SRV) für das Ziel Peripherieeinheiten-individuelle LCR-Tabellen (LCRT) erstellt werden.

2. Verfahren nach Anspruch 1,
**dadurch gekennzeichnet,**
**dass** die LCR-Tabellen (LCRT) an die entsprechenden Peripherieeinheiten (PBX1,PBX2,PBX3) übermittelt werden.

3. Verfahren nach einem der vorhergehenden Ansprüche,
**dadurch gekennzeichnet,**
**dass** zur Generierung einer LCR-Tabelle (LCRT) Informationen über die an der jeweiligen Peripherieeinheit (PBX1) verfügbaren Netzwerke sowie die Topologie aller miteinander vernetzten Peripherieeinheiten (PBX1,PBX2,PBX3) ausgewertet wird.

4. Verfahren nach einem der vorhergehenden Ansprüche,
**dadurch gekennzeichnet,**
**dass** die Peripherieeinheiten (PBX1,PBX2,PBX3) untereinander und mit dem Kommunikationsserver (SRV) über ein paketvermittelndes Netzwerk (LAN) kommunizieren.

5. Verfahren nach einem der vorhergehenden Ansprüche,
**dadurch gekennzeichnet,**
**dass** zur Erstellung der Peripherieeinheiten-individuellen LCR-Tabellen (LCRT) eine Wegetabelle (WT) erstellt wird, die Informationen über
- ein auswählbares Netzwerk,
- Tarifinformationen (TI) dieses Netzwerkes, und
- eine durch eine Identifikationsnummer (PBXID) repräsentierte Peripherieeinheit (PBX), an der ein Übergang zum Netzwerk erfolgt
enthält.

6. Verfahren nach Anspruch 5,
**dadurch gekennzeichnet,**
**dass** die Einträge der Wegetabelle (WT) nach der Tarifhöhe priorisiert werden.

7. Verfahren nach Anspruch einem der Ansprüche 5 bis 6,
**dadurch gekennzeichnet,**
**dass** zur Erstellung der Wegetabelle (WT) eine Information über die tageszeitliche Abhängigkeit der Tarifinformationen (TI) berücksichtigt wird.

8. Verfahren nach einem der Ansprüche 5 bis 7,
**dadurch gekennzeichnet,**
**dass** zur Erstellung der Wegetabelle (WT) eine Einordnung der Tarifinformationen (TI) des Netzbetreibers in eine tageszeitliche Zeitsegmentierung vorgenommen wird.

9. Verfahren nach einem der vorhergehenden Ansprüche,
**dadurch gekennzeichnet,**
**dass** zur Erstellung der Peripherieeinheiten-individuellen LCR-Tabellen (LCRT) ein Wahlplan (WP) verwendet wird, der
- einem durch eine Ortsnetzkennziffer (OKZ) repräsentierten Bereich des Netzwerks, und/oder
- einem durch eine Vorwahlnummer (VW) repräsentierten Mobilfunknetzanbieter
eine Information über das an einer jeweiligen Peripherieeinheit (PBX) verfügbare Netzwerk und dessen Tarifinformationen (TI) zuordnet.

10. Verfahren nach Anspruch 9,
**dadurch gekennzeichnet,**
**dass** der Wahlplan (WP) für die Zuordnung der verfügbaren Netzwerke und deren Tarifinformationen (TI) auf die Wegetabelle (WT) verweist, indem den Ortsnetzkennziffern (OKZ) und/oder den Vorwahlnummern (VW) eine die entsprechende Wegetabelle (WT) identifizierende Wegetabellenidentifikationsnummer (WTID) zugeordnet wird.

11. Verfahren nach einem der Ansprüche 9 bis 10,
**dadurch gekennzeichnet,**
**dass** für jede Peripherieeinheit (PBX) des Kommunikationssystems (KNW) jeweils für jede Ortsnetzkennziffer (OKZ) und/oder Vorwahlnummer (VW) eine Wegetabelle (WT) erstellt wird.

12. Verfahren nach Anspruch 11,
**dadurch gekennzeichnet,**
**dass** die modifizierte Wegetabelle (MWT) unter zusätzlicher Berücksichtigung von zeitlichen Abhängigkeiten der Tarifinformation (TI) des jeweiligen Netzbetreibers gruppiert wird.

13. Verfahren nach Anspruch 12,
**dadurch gekennzeichnet,**
**dass** unter Verwendung der modifizierte Wegetabelle (MWT) eine Wahlregeltabelle (WRT) mit einer Gruppierung nach den Identifikationsnummern (PBXID) der auszuwählenden Peripherieeinheit (PBX) erstellt wird.

14. Verfahren nach Anspruch 13,
**dadurch gekennzeichnet,**
**dass** die Wahlregeltabelle (WRT) Wahlregeln enthält, die
- eine Anwahl einer innerhalb des Kommunikationssystem (KS) befindlichen Peripherieeinheit (PBX),
- eine vorzuwählende Kennzahl eines Netzbetreibers, und,
- einen stattzufindenden Übergang aus dem Kommunikationssystem (KS)
definieren.
